# EUROPEAN PATENT APPLICATION

(11) **EP 2 581 282 A1**
(43) Date of publication of application: **17.04.2013**
(21) Application number: 10853200.3
(22) Date of filing: 14.06.2010
(51) Int. Cl.: B60W 10/00, B60W 10/06, B60W 20/00

(54) **CONTROL DEVICE FOR HYBRID VEHICLE**

(71) Applicant: TOYOTA JIDOSHA KABUSHIKI KAISHA, Toyota-shi, Aichi-ken, 471-8571 (JP)
(72) Inventor: FUKUSHIRO Eiji, Toyota-shi, Aichi 471-8571 (JP)
(74) Representative: Intès, Didier Gérard André
(86) International application number: PCT/JP2010/060049
(87) International publication number: WO 2011/158318

(57) **Abstract**

An object is to suppress an uncomfortable feeling induced by, from the start of an engine rotation stop process, turning on an indicator lamp for informing the driver that the vehicle is motor running mode.

The turning on of the EV lamp 50 is delayed from the start of the engine rotation stop process when the vehicle speed V is in a vehicle speed range (a predetermined low vehicle speed range VLow) where the driver is easy to feel the vehicle vibration noise attendant on passage of the engine speed N_{E} through the engine resonance band N_{ERES}, whereupon in the case where the vehicle 10 is in the predetermined low vehicle speed range VLow, a time difference, can be suppressed between the illumination timing of the EV lamp 50 in the engine rotation stop process and the stop timing of the engine 18 that the driver feels by the vehicle vibration occurring when the engine speed N_{E} lowered in the engine rotation stop process passes through the engine resonance band N_{ERES}. In the case where the vehicle 10 is not in the predetermined low vehicle speed range VLow, the EV lamp 50 is allowed to go on as soon as possible after the start of the engine rotation stop process.

## Description

The present invention relates to a control device of a hybrid vehicle having an indicator lamp for informing the driver that the vehicle is motor running.

### BACKGROUND ART

A hybrid vehicle is well known that has an engine and a motor as driving force sources for running and that, by turning on an indicator lamp, informs the driver that the vehicle is in motor running mode where the vesicle runs using only the motor as the driving force source for running. Vehicles described in Patent Documents 1 to 5 are examples thereof. Specifically, Patent Document 1 describes turning on and off a motor regeneration lamp or a motor power running lamp based on a detection result of the motor operating state. Patient Document 3 describes turning on an electric-only indicator when the vehicle is operating in an electric-only mode where the vehicle runs using only the motor.

In motor running mode, the indicator lamp is desired to be on as early as possible and as long as possible. It is thus conceivable to turn on the indicator lamp not only during the motor running mode where the engine stops rotating but also from when executing a process (engine rotation stop process) for stopping the engine from rotating. That is, it is conceivable to turn on the indicator lamp when e.g. the engine does not work (operate) as a driving force source for running irrespective of whether the engine stops rotating.

### PRIOR ART DOCUMENT

### Patent Documents

Patent Document 1: Japanese Laid-Open Patent Publication No. 9-98501
Patent Document 2: Japanese Laid-Open Parent Publication No. 2009-143553
Parent Document 3: Japanese Laid-Open Patent Publication No. 2005-255158
Patent Document 4: Japanese Laid-Open Patient Publication No. 2003-260990
Patent Document 5: Japanese Laid-Open Parent Publication No. 7-315078

### SUMMARY OF THE INVENTION

### Problems to Be Solved by the Invention

By the way, a relatively large vehicle vibration easily occurs when the engine vibration frequency coincides with the resonance frequency of a drive line (power transmission line) through which the engine power is transmitted to driving wheels. The engine vibration frequency band is called an engine resonance band and the engine resonance band may exist in a lower rotation range than the idling speed of the engine. In such a case, a certain time is required for the engine speed to be lowered to the engine resonance band after the start of the engine rotation stop process. Consequently, in the case of a form of burning on the indicator lamp from the start of the engine rotation stop process, the illumination of the indicator lamp from the start of the engine rotation stop process does not coincide with the driver's recognition of the engine stop based on the vehicle vibration occurring when passing through the engine resonance band in the engine rotation stop process, in other words, there is a time gap (interval) between the indicator lamp illumination and the engine stop recognition, so that the driver may easily have an uncomfortable feeling. In particular, at the time of low vehicle speed running or vehicle stopping during which the running vibration becomes small, the driver is easy to feel a vehicle vibration (vibration at engine stop) in the engine rotation stop process and may more easily have the uncomfortable feeling. Apart from such a problem, during the engine rotation stop process lowering the engine speed using an electric motor for example, the engine speed may temporarily rise due to a remaining engine torque. In such an event, the engine rotation stop process may be interrupted to lower the raised engine speed by the electric motor, after which engine rotation stop process may be resumed. This may allow the indicator lamp turned on from the start of the engine rotation stop process to temporarily go off and then again go on, i.e., this may bring about a blinking of the indicator lamp where the indicator lamp frequently goes can and of, with the result that the driver may have an uncomfortable feeling of the lamp blinking. The above problems are unknown.

The present invention was conceived in view of the above circumstances as a background and an object thereof is to provide a control device of a hybrid vehicle capable of suppressing an uncomfortable feeling induced by, from the start of an engine rotation stop process, turning on an indicator lamp for informing the driver that the vehicle is motor running.

### Means for Solving the Problems

To achieve the object, the present invention provides a control device of a hybrid vehicle (a) having an engine and a motor as driving force sources for running and configured to inform, a driver that the vehicle is in motor running mode where the vehicle runs using only the motor as the driving force source for running, by turning on an indicator lamp, from the start of an engine rotation stop process preceding the motor running mode, therein (b) in a predetermined low vehicle speed range previously defined as a vehicle speed range where the driver is sensitive to a vehicle vibration due to passage of an engine speed through an engine resonance band, turning on of the indicator lamp is delayed from the start of the engine rotation stop process.

### The Effects of the invention

Consequently, the turning on of the indicator lamp is delayed from the start of the engine rotation stop process when the vehicle speed is in a predetermined low vehicle speed range that is previously defined as a vehicle speed range where the driver is easy to feet the vehicle vibration attendant on passage of the engine speed through the engine resonance band, whereupon in the case where the vehicle is in the predetermined low vehicle speed range for example, a time difference can be suppressed between the illumination timing of the indicator lamp in the engine rotation stop process and the stop timing of the engine that the driver feels by the vehicle vibration occurring when the engine speed lowered in the engine rotation stop process passes through the engine resonance band. In the case where the vehicle is not in the predetermined low vehicle speed range, i.e., where the vehicle is in a vehicle speed range originally hard to feel the vehicle vibration, the indicator lamp is allowed to go on as soon as possible after the start of the engine rotation stop process. Thus, the indicator lamp can be turned on as early as possible and the uncomfortable feeling arising from the illumination of the indicator lamp is suppressed.

Preferably, in the predetermined low vehicle speed range, turning on of the indicator lamp is delayed from the start of the engine rotation stop process, based on the engine speed lowered for engine rotation stop. Consequently, in the case where the vehicle is in the predetermined low vehicle speed range for example, a time difference can be property suppressed between the illumination timing of the indicator lamp in the engine rotation stop process and the stop timing of the engine that the driver feels by the vehicle vibration occurring when the engine speed lowered in the engine rotation stop process passes through the engine resonance band.

Preferably, in the predetermined low vehicle speed range, the indicator lamp is turned on if the engine speed lowered for the engine rotation stop falls below the engine resonance band. Consequently, in the case where the vehicle is in the predetermined low vehicle speed range for example, the indicator lamp is allowed to turn on as early as possible and a time difference can be securely suppressed between the illumination timing of the indicator lamp in the engine rotation stop process and the stop timing of the engine that the driver feels by the vehicle vibration occurring when the engine speed lowered in the engine rotation stop process passes through the engine resonance band.

Preferably, if, after turning on of the indicator lamp, the engine speed temporarily rises when control is not performer to raise the engine speed, the indicator lamp remains on. Consequently, in contract with the fact that the indicator lamp may undergo a blinking the indicator lamp temporarily is turned off and then again turned on as a result of a temporary rise in the engine speed occurring when control is not performed to raise the engine speed after turning on the indicator lamp based on the engine speed when the vehicle is in the predetermined low vehicle speed range for example, i.e., as a result of an unintended temporary rise in the engine speed, the turning on of the indicator lamp is kept to suppress the blinking of the indicator lamp in case of the unintended temporary rise in the engine speed. This suppresses a feel of lamp blinking (an uncomfortable feeling of the lamp flashing) after the temporary illumination of the indicator lamp.

Preferably, while the indicator lamp is on, turning off of the indicator lamp is delayed from the start of an engine start-up process of raising the engine speed for engine start-up. Consequently, a time difference can be suppressed between the timing of the indicator lamp turning off when the motor running goes out of use during the engine start-up process and the engine start-up timing that the driver feels by the vehicle vibration occurring when the engine speed raised in the engine start-up process passes through the engine resonance band for example. Thus, the indicator lamp can remain on as long as possible, suppressing the uncomfortably feeling arising from the illumination of the indicator lamp.

Preferably, while the indicator lamp is on, the indicator lamp is turned off if the engine speed raised for the engine start-up exceeds the engine resonance band. Consequently, a time difference can be securely suppressed between the timing of the indicator lamp turning off when the motor running goes out of use during the engine start-up process and the engine start-up timing that the driver feels by the vehicle vibration occurring when the engine speed raised in the engine start-up process passes through the engine resonance band for example.

To achieve the object, the another invention provides a control of a hybrid vehicle (a) having an engine and a motor as driving force sources for running and configured to inform a driver that the vehicle is in motor running mode where the vehicle runs using only the motor as the driving force source for running, by turning on an indicator lamp, from the start of an engine rotation stop process preceding the motor running, wherein (b) if, after turning on of the indicator lamp, the engine speed temporarily rises when control is not performed to raise the engine speed, the indicator lamp remains on.

Consequently, the indicator lamp remains on if the engine speed temporarily rises when control is not performed to raise the engine speed after the turning on of the indicator lamp. Therefore, in contrast with the fact that the indicator lamp may undergo a blinking that the indicator lamp temporarily is turned off and then again turned on as a result of a temporary rise in the engine speed occurring when control is not performed to raise the engine speed after turning on the indicator lamp, i.e., as a result of an unintended temporary rise in the engine speed, the blinking the indicator lamp is suppressed. Thus, the indicator lamp can be turned can as soon as possible after the start of the engine rotation stop process, suppressing a feel of lamp blinking (an uncomfortable feeling of the lamp flashing) after the temporary illumination of the indicator lamp, i.e., an uncomfortable feeling arising from the illumination of the indicator lamp.

Preferably, while the indicator lamp is on, turning off of the indicator lamp is delayed from the start of the engine start-up process of raising the engine speed for engine start-up. Consequently, the indicator lamp can remain on as long as possible after the start of the engine start-up process.

Preferably, while the indicator lamp is on, the indicator lamp is turned off if the engine speed raised for engine start-up exceeds a rotation speed enabling complete combustion of the engine. Consequently, the indicator lamp can remain on as long as possible until the actual start-up of the engine after the start of the engine start-up process.

Preferably, in the motor running mode where the engine is in a rotation stop state, the indicator lamp is turned on. Consequently, the driver can be informed of being in the motor running mode through turning on of the indicator lamp e.g. during the motor running where the engine is in the rotation stop state and during the engine rotation stop process where the engine is controlled toward the rotation stop state.

Preferably, the hybrid vehicle comprises an electric differential device having a dilferential mechanism coupled to the engine in a power transmittable manner and a differential electric motor coupled to the differential mechanism in a power transmittable manner, an operating state of the differential electric motor being controlled to control a differential state of the differential mechanism, and wherein the engine is rotationally driven by the differential electric motor to lower and raise the engine speed. Consequently, in the hybrid vehicle having the electric differential device for example, the indicator lamp can be turned on as early has possible, suppressing an uncomfortable feeling arising from the turning on of the indicator lamp.

### DESCRIPTION OF THE DRAWING

Fig. 1 is a schematic representation explaining an example of a transmission mechanism disposed on a vehicle to which the present invention is applied.
Fig. 2 is an alignment chart capable of representing on straight lines relative relationships among rotational speeds of the rotary elements of the transmission mechanism of Fig. 1.
Fig. 3 is a diagram explaining a schematic configuration of the vehicle and is a block diagram explaining main part of a control system disposed in the vehicle.
Fig. 4 is a function block diagram explaining main part of control functions in the electronic control device.
Fig. 5 is a diagram depicting an example of optimum fuel economy line of the engine.
Fig. 6 is a flowchart explaining major control actions of the electronic control device, i.e., control actions for suppressing an uncomfortable feeling attributable so turning on of the EV lamp.
Fig. 7 is a timing chart corresponding to the flowchart of Fig. 6, and is a diagram depicting an example when the vehicle speed is in the low vehicle speed range.
Fig. 8 is another timing chart corresponding to the flowchart of Fig. 6, and is a diagram depicting an example when the vehicle speed is a high vehicle speed not lying in the low vehicle speed range.
Fig. 9 is further timing chart corresponding to the flowchart of Fig. 6, and is a diagram depicting an example when the engine start-up is performed after the turning on of the EV lamp.

### MODES FOR CARRYING OUT THE INVENTION

Preferably, the electric differential device is an electric continuously variable transmission that includes the differential mechanism in the form of a planetary gear train for example distributing a power from the engine to the differential electric motor and to an output rotating member; and the motor disposed on the output rotating member of the differential mechanism in a power transmittable manner; differential actions of the differential mechanism mechanically transmitting main part of the power from the engine to driving wheels and electrically transmitting the remainder of the power from the engine via an electrical path from the differential electric motor to the motor and an accumulator battery. The speed ratio of the electric continuously variable transmission is shifted electrically.

In such electric differential device, when running at low speed and low load for example where the engine has a relatively low efficiency, so-called motor running is carried out that obtains a driving force for running using only the motor with the engine stopped. If the engine is in operation during the motor running mode, the engine is stepped to lower the engine speed toward the engine rotation stop state using the differential electric motor.

Preferably, the hybrid vehicle is configured including the electric differential device but it may be configured including, instead of the electric differential device, a transmission mechanism such as a planetary-gear automatic transmission, a belt-type continuously variable transmission, or a traction continuously variable transmission. To sum up, the hybrid vehicle may be any one as long as it is configured to have an engine and a motor as driving force sources for running, with the engine being stopped in the motor running mode where the vehicle runs using only the motor as the driving force source for running.

Embodiments of the present invention will now be described in detail with reference to the drawings.

### First Embodiment

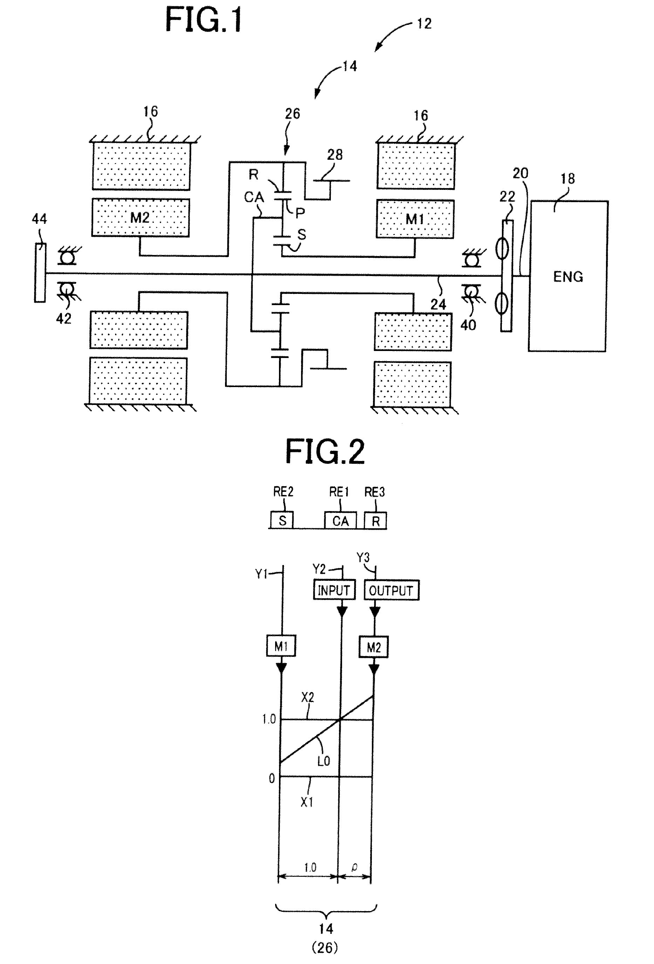

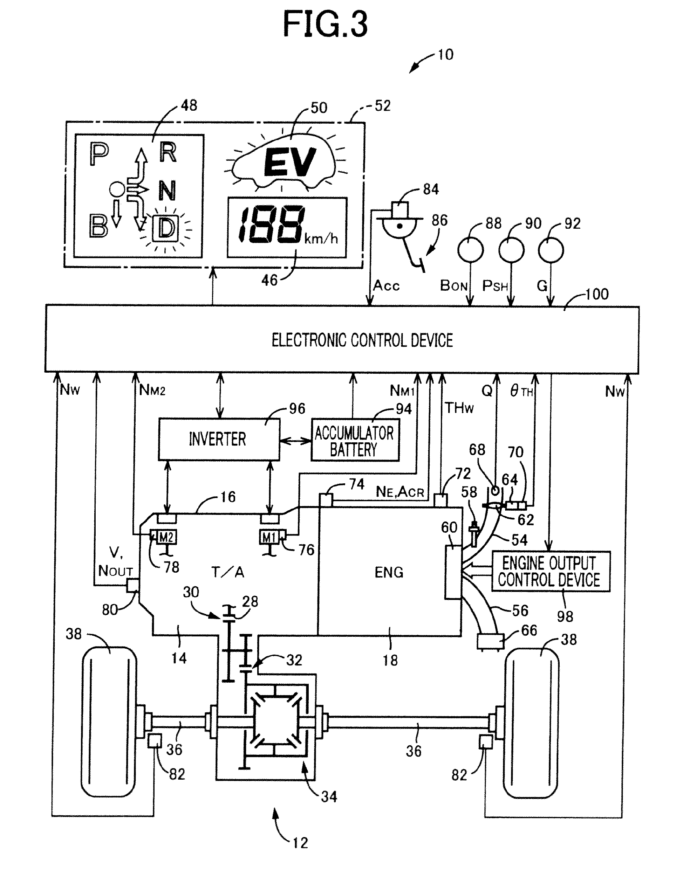

Fig. 1 is a schematic representation explaining a transmission mechanism 14 making up a part of a vehicle power transmitting device (hereinafter, power transmitting device) 12 disposed on a hybrid vehicle (hereinafter, vehicle) 10 (see Fig. 3) to which the present invention is applied. Preferring to Fig. 1, the transmission mechanism 14 includes, in a transaxle (T/A) case 16 that is a non-rotating member mounted on a vehicle body, in the mentioned order from an engine 18 as a driving force source for running that is an internal combustion engine such as a gasoline engine or a diesel engine, a damper 22 operatively coupled to a crankshaft 20 that is an output shaft of the engine 18, for absorbing pulsations caused by e.g. variations in torque from the engine 18; an input shaft 24 rotationally driven by the engine 18 via the damper 22; a first electric motor M1; a planetary gear train 26 functioning as a powder distribution mechanism ; and a second electric motor M2.

The power transmitting device 12 is advantageously used in e.g. an FF (Front-engine Front-drive) vehicle having the engine transversely disposed in the vehicle 10 and includes the transmission mechanism 14; a counter gear pair 30 one of which is an output gear 28 acting as an output rotating member of the transmission mechanism 14; a final gear pair 32; a differential gear train (final reduction gear unlit) 34; and a pair of axles 36. Power of the engine 18 is transmitted via the transmission mechanism 14, the counter gear pair 30, the final gear pair 32, the differential gear train 34, and the pair of axles 36 in sequence to a pair of driving wheels 38 (see Fig. 3).

The input shaft 24 is at its both ends rotatably supporter by ball bearings 40 and 42 and is at its one end coupled via the damper 22 two the engine 18 so as to be rotationally driven by the engine 18. An oil pump 44 acting as a lubricant feeder is coupled to the other end of the input shaft 24 so that the oil pump 44 is rotationally driven by the rotational derive of the input shaft 24 to feet lubricant to the portions of the power transmitting device 12 such as the planetary gear strain 26, the counter gear pair 30, the final gear pair 32, and the ball bearings 40 and 42.

The planetary gear train 26 is a single-pinion planetary gear train having a predetermined gear ratio p sand includes, as rotary elements, a sun gear S: a opinion gear P; a carrier CA supporting the pinion gear P such that the pinion gear P can rotate on its axis and revolve aground the sun gear S; sand a ring gear R meshed with the sun gear S via the pinion gear P. when the number of teeth of the sun gear S is ZS and the number of teeth of the ring gear R is ZR, the gear radio p is expressed as ZS/ZR. The planetary gear train 26 is a mechanical assemble that mechanically distribute an output of the engine 18 transmitted to the input shaft 24 and distributes the output of the engine 18 to the first electric motor M1 and the output gear 28. In the planetary gear train 26, the carrier CA is coupled to the input shaft 24 i.e. the engine 18 in a power transmittable manner; the sun gear S is coupled to the first electric motor M1 in a powder transmittable manner: and the ring gear R is coupled to the output gear 28. This allows the sun gear S, the carrier CA, and the ring gear R as three rotary elements of the planetary gear train 26 two be relatively rotatable to one another, to present a differential state where a differential action is operable i.e. where a differential action works. In consequence, the output of the engine 18 is distributed to the first electric motor M and the output gear 28, white the first electric motor MI generates electrical energy by the output of the engine 18 distributed so the first electric motor kl so that the generated electrical energy is stored and rotationally drives the second electric motor M2. Thus, the transmission mechanism 14 goes to e.g. a contiguously variable transmission state (electric CVT state) to function as an electrical contiguously variable transmission in which the rogation of the output gear 28 is continuously varied irrespective of the given rotation of the engine 18.

In this manner, the transmission mechanism 14 is an electrical differential device i.e. an electrical continuously variable transmission having the planetary gear train 26 as a differential mechanism coupled to the engine 18 in a powder transmittable manner and the first electric motor M1 as a differential electric motor coupled to the planetary gear train 26 in a power transmittable manner so that the differential state of the planetary gear train 26 is controlled by controlling the operating state of the first electric motor M1. The transmission mechanism 14 is provided with the second electric motor M2 as a motor functioning as a driving force source for running coupled operatively to the output gear 28 for integral rotation therewith. That is, the second electric motor M2 is an electric motor for running coupled to the driving wheels 38 in a power manner. The first electric motor M1 and the second electric motor M2 are so-called motor generators also having an electric power generation function, the first electric motor M1 having at least a generator (electric power generation) function for generating a reaction force, the second electric motor M2 having at least a motor (electric motor) function for outputting a driving force as a driving force source for running. The thus configured transmission mechanism 14 provides a power transmitting device motor running with the planetary gear train 26 working as a transmission.

Fig. 2 is an alignment chart capable of representing on straight lines relative relationships among rotational speeds of the rotary elements of the transmission mechanism 14. The alignment chart of Fig. 2 depicts two-dimensional coordinates having an axis of abscissas representative of a relationship of the gear ratio ρ of the planetary gear train 26 and an axis of ordinates representative of a relative rotational speed, with a horizontal line X1 representing a rotational speed of zero sand a horizontal line X2 representing a rotational speed of "1.0" i.e. a rotational speed N_{E} of the engine 18 operatively coupled to the input shaft 24.

Three vertical lines Y1, Y2, and Y3 corresponding to the three rotary elements of the planetary gear train 26 making up the transmission mechanism 14 represent, in sequence from left, relative rotational speeds the sun gear S corresponding to a second rotary element RE2, the carrier CM corresponding to a first rotary element RE1, and the ring gear R corresponding to a third element RE3, with their respective intervals being defined defending on the gear ratio ρ of the planetary gear train 26. In more detail, if the interval between the sun gear and the carrier is an interval corresponding to "1" in the relationships among the vertical lines of the alignment chart, the interval between the carrier and the ring gear is an interval corresponding to the gear ratio ρ of the planetary gear train. In other words, in the transmission mechanism 14, the interval between the vertical lines Yt and Y² is set to the interval corresponding to "1" while the interval between the vertical lines Y2 and Y3 is set to the interval corresponding to the gear ratio_ρ.

Representing by the alignment chart of Fig. 2, the transmission mechanism 14 of this embodiment is configured such that the first rotary element RE1 (carrier CA) of the planetary gear train 26 is coupled to the input shaft 24 i.e. the engine 18 in a power transmittable manner; the second rotary element RE2 (sun gear S) is to to the first electric motor M1 in a power transmittable manner, and the third rotary element RE3 (ring gear R) is coupled to the output gear 28 and the second electric motor M2 and coupled to the driving wheels 38 in a power transmittable manner; so that the rotation of the input shaft 24 is transmitted via the output gear 28 to the driving wheels 38. At this time, an inclined straight line L0 passing through an interjection of Y2 and X2 represents a relationship between the rotational speed of the sun gear S and the rotational speed of the ring gear R. For example, the transmission mechanism 14 (planetary gear strain 26) offers a differential state where the first rotary clement RE to the third rotary element RE3 are relatively rotatable to once another, so that ifs the rotational speed of the ring gear R represented by an intersection of the straight line L0 and the vertical lino Y3 is retrained by the vehicle speed V to be substantially constant, when the rotational speed of the sun gear S represented by an interjection of the straight line Leo and the vertical line Y is raised or lowered by the control of a rotational speed N_{M1} of the first electric motor M1, the rotational speed of the carrier CA i.e. the benzine speed N_{E} represented by an intersection of the straight line L0 and the vertical line Y2 is raised or lowered.

Fig. 3 is a diagram explaining a schematic configuration of the vehicle 10 and is a block diagram explaining main part of a control system disposed in the vehicle 10. Referring to Fig. 3, in the vicinity of the driver's seat is disposed a combination meter 52 that includes a speedometer 46 indicating a current vehicle speed V; a shrift-position indicator 48 indicating the state of a current shift position; and an EV lamp 50 as an indicator lamp indicating that the vehicle is in motor running mode where the vehicle runs using only the second electric motor M2 as the driving force source for running.

The engine 18 is a publicly known automobile gasoline engine and includes an intake pipe 54 connected to an intake pore of a combustion chamber; an exhaust pipe 56 connected to an exhaust port of the combustion chamber: a fuel injector 58 that injects and Supplies fuel to intake air (section air) taken into the combustion chamber; and an igniter 60 that ignites an air-fuel mixture in the combustion chamber consisting of fuel injected and supplied from the fuel injector sand taken-in air. Inside the intake pipe 54 of the engine 18 is disposed an electronic throttle value 62 which is opened or closed by a throttle actuator 64. The exhaust pipe 56 of the engine 18 is provided with a catalyst 66 so that exhaust gas generated as a result of combustion in the engine 18 flows through the exhaust pipe 56 into the catalyst 66 and is purified by the catalyst 66 to be discharged into the atmosphere.

The vehicle 10 is provide with an electronic control device 100 including a controlled of the vehicle 10 that informs the driver by turning on an EV lamp 50 for example that the vehicle is motor running. The electronic control device 100 includes a so-called microcomputer having a CPU_{,} a RAM, a ROM, and an I/O interface for example and the CPU performs signal processing ion accordance with a program previously stored in the ROM while making use of a temporary storage function of the RAM, to thereby execute various controls of the vehicle 10. For example, the electronic control device 100 executes vehicle controls such as hybrid drive control relating to the engine 18, the first electric motor M1, the second electric motor M2, etc. and is configured separately, if needed, e.g. for output control use of the engine 18 and for shift control use of the transmission mechanism 14.

The electronic control device 100 is fed with e.g. a signal indicative of an intake air quantity Q detected by an air flow meter 68 disposed upstream of the electronic throttle valve 62 of the intake pipe a signal indicative of a throttle valve angle θ_{TH} that is an opening angle of the electronic throttle valve 62 detected by a throttle valve angle sensor 70; a signal indicative of a cooping water temperature TH_{w} of the engine is detected by a coolant temperature sensor 72; a signal indicative of the engine speed N_{E} that is a rotational speed of the engine 18 and a signal indicative of a crank dangle A_{CR} that is a rotational angel (position) of the crankshaft 20, detected by an engine speed sensor 74; a signal indicative of an M1 rotational speed N_{M1} that is a rotational speed of the first electric motor M1 detected by an M I rotational speed sensor 76; a signal indicative of an M2 rotational speed that is a rotational speed of the second electric motor M2 detected by an M2 rotational speed sensor 78; a signal indicative of the vehicle speed V corresponding to an output rotational speed that is a rotational speed of the output gear 28 detected by a vehicle speed sensor 80; a signal indicative of each wheel speed N_{W} that is a rotational speed of each of the wheels (driving wheels 38 and driven wheels not depicted) detected by wheel speed sensors 82; a signal indicative of an accelerator opening A_{CC} as ain accelerator operation amount that is an operation amount of an accelerator pedal 86 as a driver's (user's) amount of demand for acceleration on the vehicle 10 detected by an accelerator opening sensor 84; a signal indicative of a foot brake operation (brake on) B_{ON} detected by a brake switch 88; a signal indicative of a shift position P_{SH} of a shift lever detected by a shift position sensor 90; and a signal indicative of a longitudinal acceleration G (e.g. floor acceleration G in the vehicle compartment) of the vehicle 10 detected by an acceleration sensor 92. The electronic control device 100 is further fed, from sensors and switches not depicted, with a signal indicative of an accumulator battery temperature TH_{BAT} that is temperature of an accumulator battery 94; a signal indicative of a charge/discharge current (or input/output current) I_{BAT} that is a charged current to or a discharged current from the accumulator battery 94; a signal indicative of a voltage V_{BAT} of the accumulator battery 94; and a signal indicative of a state of charge (charged capacity) SOC of the accumulator battery 94 calculated based can the accumulator battery temperature TH_{BAT}, the charge/discharge current I_{BAT}, and voltage V_{BAT}.

The accumulator battery 94 is a DC rower supply capable of charging and discharging and is in the form of a secondary battery such as a nickel-hydrogen battery and a lithium-ion battery. For example, during vehicle acceleration running, the accumulator battery 94 stores through an inverter 96 electrical energy (electric power) generated by the first electric motor M1 when receiving a redaction force against the output of the benzine 18. In regenerative braking during vehicle deceleration running, electric power generated by the second electric motor M2 is stoned through the inverter 96 into the accumulator battery 94. During the motor running mode using the second electric motor M2, the stored electric power is supplied through the inverter 96 to the second electric motor M2.

The electronic control device 100 outputs, as control signals to an engine output control device 98 that control the engine output for example, a derive signal to the throttle actuator 64 for basically controlling the throttle valve angle θ_{TH} so as to increase accordingly as the accelerator opening A_{CC} increases; a fuel supply amount signal controlling the amount of fuel supply by the fuel injector 58 intro the intake pipe 54 or cylinders of the engine 18; an ignition signal commanding the timing of ignition of the engine 18 by the igniter 60, etc. The electronic control device 100 further outputs a command signal to the inverter 96 that control actions of the first electric motor M1 and the second electric motor M2 for example.

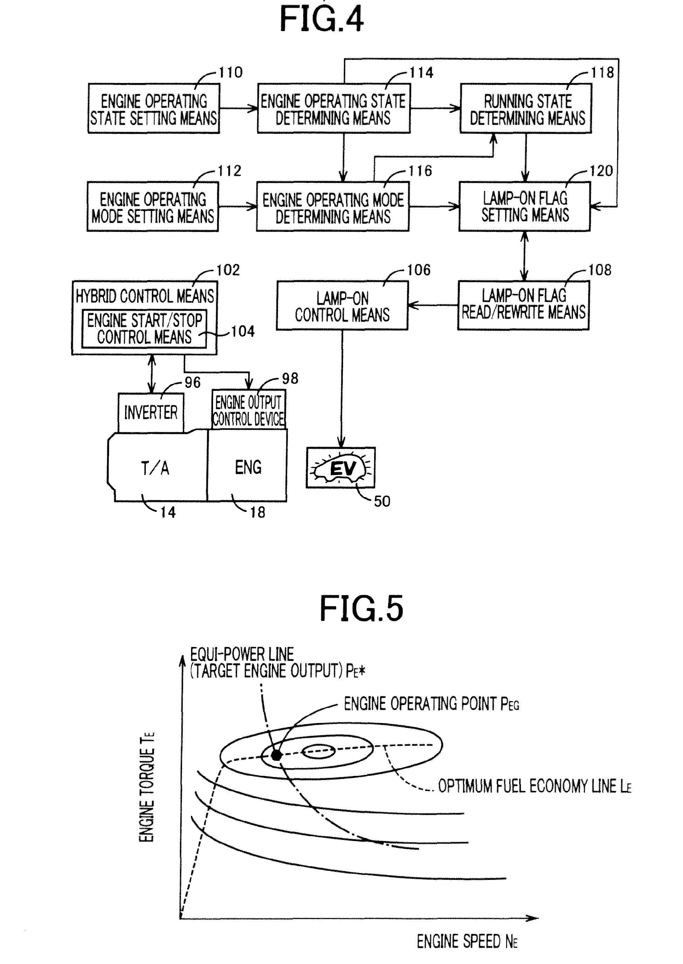

Fig. 4 is a function block diagram explaining main part of control function effected by the electronic control device 100. If Fig. 4, a hybrid control portion, i.e. a hybrid control means 102 includes e.g. a function as an engine drive control means that control the drive of the engine 18 via the engine output control device to and a function as an electric motor action control means that controls via the inverted 96 the actions as the driving force source or the generator of the first electric motor M1 and the second electric motor M2, to use those control functions to execute hybrid drive control, etc. of the engine 18, the first electric motor M1, and the second electric motor M2.

Specifically, the hybrid control means 102 allows the engine 18 to work in an effective working range while varying and optimizing the distribution of the driving force between the engine 18 and the second electric motor M2 and the reaction force from the electric power generation of the first motor M1, to thereby control a gear ratio γ0 of the transmission mechanism 14 as an electric continuously variable transmission. For example, at the running vehicle speed V at that time, the hybrid control means 102 calculates a target (demand) output (user demand power) of the vehicle 10 from the acceleration opening A_{CC} as driver's output demand amount and the vehicle speed V; calculates a total target output required from the target output and a charge demand value (charge demand power); calculates a target engine output (demand engine output, engine demand power) P_{E}* taking into consideration a transmission an auxiliary machine load, an assist Torque of the second electric motor etc. so as to obtain the total target output; and, so as to reach the engine speed N_{E} and the output torque (engine torque) T_{E} of the engine 18 capable of obtaining the target engine output P_{E}*, controls the engine 18 while controlling the output or the electric power generation of the first electric motors M1 I and the second electric motor M2.

In other words, the hybrid control means 102 executes the control of the engine 18, the first electric motor M1, and the second electric motor M2 for the purpose of improving the engine performance and fuel economy. In such a hybrid control, the transmission mechanism 14 is configured to function as an electric continuously variable transmission in order to render compatible the engine speed N_{E} defined to allow the engine 18 to work in an effective worming range and the output rotational speed N_{OUT} defined by the vehicle speed V, etc. That is, the hybrid control means 102 stores in advance a well-known optimum fuel consumption rate curve (fuel economy map, optimum fuel economy line) L_{E} that is one type of a performance curve of the engine 18, as indicated by a broken line in Fig. 5 for example and that is previously experimentally found so as to render compatible the drivability (engine performance) the fuel economy (fuel economy performance) during the continuously variable transmission running in two-dimensional coordinates consisting of the engine speed N_{E} and the engine torque T_{E} for example. The hybrid control means 102 defines target values of the engine torque T_{E} and the engine speed N_{E} for generating a target engine output P_{E}* required to achieve the total target output for example so that the engine 18 is operated with an engine operating point as as an operating point of the engine 18 going along the optimum fuel consumption rate curve L_{E}; executes the output control of the engine 18 so as to obtain the target values; and continuously controls the gear ratio γ0 of the transmission mechanism i4 within the shiftable variation range. For example, the hybrid control means 102 outputs to the engine output control device 98 solely or in combination a command for allowing the throttle actuator 64 to control the opening and closing of the electronic throttle valve 62 for throttle control, a command for controlling the amount of fuel injection and the timing of injection by the fuel injector 58 for fuel injection control, and a command for controlling the timing of ignition by the igniter 60 for ignition timing control, to thereby execute the output control of the engine 18 as to obtain the target value of the engine torque T_{E} for generating the target engine output P_{E}* required. The engine operating point P_{EG} refers to an operating point indicating, the operating state of the engine 18 in the two-dimensional coordinates having coordinate axes in the form of the state amounts representing the operating state of the engine 18 exemplified by the engine speed N_{E} and the engine torque T_{E}. In this embodiment, the fuel economy refers for example to travel distance per unit fuel consumption amount or to a fuel consumption rate (=fuel consumption amount/driving wheel output) as a whole vehicle.

Since at this time the hybrid control means 102 supplies electrical energy generated by the electric motor M1 for example through the inverter 96 to the accumulator battery 94 and the second electric motor M2, a major part of power of the engine 18 is mechanically transmitted to the output gear 28 whereas a part of the power of the engine 18 is consumed for the power generation by the first electric motor M1 and is converted thereat into electrical energy, which in turn is supplied through the inverter 96 to the second electric motor M2 to drive the second electric motor M2 so that a deriving force output from the second electric motor M2 is transmitted to the output gear 28. By the devices involved tin the process from the generation of electrical energy by the first electric motor M1 relating to the power generation to the consumption thereof by the second electric motor M2 relating to the drive, an electrical path is established from the conversion of a part of power of the engine 18 into electrical energy to the conversion of the electrical energy into mechanical energy.

During the engine running using the engine 18 as the driving force source, the hybrid means 102 supplies electrical energy from the first electric motor M1 via the electrical path and/or electrical energy from the accumulator battery 94 to the second electric motor M2 to drive the second electric motor M2 to impart torque to the driving wheels 38, thereby enabling a so-called torque assist for assisting the power of the engine 18.

The hybrid control means 102 may execute the motor running mode (EV running mode) where the vehicle runs using only the second electric motor M2 as the driving force source, by driving the second electric motor M2 by electric power from the accumulator battery 94 with the operation of the engine 18 stopped. The EV running mode by the hybrid control means 102 is generally executed in a relatively low output torque T_{OUT} range where the engine efficiency is lower than in a high torque range, i.e., a low engine torque T_{E} range or in a relatively tow vehicle speed range of the vehicle speed V, i.e., a low load range. During the EV running mode, to suppress the drag of the engine 18 whose operation is stopped to improve the fuel economy, the hybrid control means 102 idles the first electric motor M1 with no load to keep the engine speed N_{E} at zero or zero if necessary by the differential action of the transmission mechanism 14. In other words, during the EV running mode, the hybrid control means 102 not only stops the operation of the engine 18 but also stops the rotation (rotation drive) of the engine 18.

Specifically, the hybrid control means 102 is functionally provided with an engine start/stop control portion an engine start/stop control means 104 that starts and stops the engine 18 in order to perform a selective switching between the engine running and the motor running. If the engine start/stop control means 104 determines a switch to the motor running by a release of the accelerator pedal 86 and a resultant reduction in the accelerator opening A_{CC} during the engine running or if it determines a stop of the operation of the engine 18 during the vehicle stop, the engine start/stop control means 104 stops the operation of the engine 18 by stopping the supply of fuel from the fuel injector 58, that is, by a so-called fuel cut and executes a series of engine rotation stop processes for reducing the engine speed by the first electric motor M1. Namely, the engine start/stop control means 104 positively reduces the engine speed toward zero by the first electric motor M1, in addition to putting the engine 18 in the rotation stop state, i.e., naturally reducing the engine speed N_{E} to be zero as a result of the operation stop of the engine 18 by the fuel cutting action. The engine start/stop control means 104 generates a torque (M2 torque) T_{M2} of the second electric motor M₂ as a cancel torque for cancelling a direct engine torque transmitted to the output side (output gear 28) attributable to a torque (M1 torque) T_{M1} of the first electric motor M1 occurring at this time. To alleviate a shock at the next engine start-up, the engine start/stop means 104 executes an engine stop position control for adjusting a crank angle A_{CR} by the first electric motor M1 so that the engine stops when the crank angle A_{CR} !ies within a predetermined rotational angle (position) range at the completion of the engine rotation stop process. Prior to reducing the engine speed N_{E} by the first electric motor M1 after the transition to the engine rotation stop process, the engine start/stop control means 104 executes a so-caLLed M₂ pressing control for applying an M2 torque (pressing torque) to the output gear 28 by the second electric motor M2. in order to prevent tooth hammering on the output gear 28 of the transmission mechanism 14 for example. During the M₂ pressing control, the engine start/stop control means 104 brings the first electric motor M1 into load-free state and keeps the engine speed N_{E} at a predetermined idling speed N_{EIDL}. allowing the engine 18 to independently operate.

If it is determined that the engine start-up is needed to generate a greater driving force as a result an increase in the accelerator opening A_{CC} by depressing the accelerator pedal 86 during the motor running for example or if it is determined that the engine start-up is needed for charge of the accumulator battery 94, drive of the vehicle auxiliary machines, warm-up, etc. when the state of charge SOC of the accumulator battery 94 lowers during the vehicle stop where the operation of the engine 18 is stopped or during the motor runing mode or when a demand is issued for drive of the vehicle auxiliary machines such as a compressor of an air conditioner or when the warm-up is uncompleted, the engine start/stop control means 104 executes a series of engine start-up processes for energizing the first electric motor M1 to increase a first electric motor rotational speed N_{M1} to generate a predetermined engine starting torque i.e. a cranking torque T_{M1}cr for rotationally driving the engine speed N_{E} up to a predetermined complete-combustion rotational speed N_{E}A or more allowing the complete combustion in the engine 18; opening the electronic throttle valve 62 by the throttle actuator 64 at the predetermined complete-combustion rotational speed N_{E}A or more; feeding (injecting) fuel F by the fuel injector 58; and igniting by the igniter 60 to start the engine 18. In this manner, the first electric motor M1 functions as a starting motor (starter) for rotationally driving the engine 18 upon the engine start-up.

The electronic control device 100 of this embodiment has a function of, from the start of the engine rotation stop process preceding the motor running, turning on the EV lamp 50 to inform the driver that the vehicle is motor running. Specifically, the electronic control 100 turns on the EV lamp 50 e.g. during the motor running where the vehicle is actually running with the rotation of the engine 18 stopped; during the vehicle stop where, with the rotation of the engine 18 stopped, the motor running mode is executed upon the vehicle starting/running (in this embodiment, "during the motor running" includes such "during the vehicle stop"); during the execution of the engine rotation stop process controlling the engine 18 toward the rotation stop state for switching to the motor running mode upon the operation of the engine; and when the engine 18 is not yet in operation though the engine start-up process is being executed for the engine start-up. By informing the driver that the vehicle is motor running by illumination of the EV lamp 50 in this manner, the EV lamp 50 can be turned on earlier and longer than the case of turning on the EV lamp 50 only during the motor running mode.

In the engine 18 of this embodiment, an engine resonance band N_{ERES} exists in a lower rotation range an idling speed N_{EIDLE} (or a complete-combustion rotational speed N_{E}A lower than the idling speed N_{EIDL}), the engine resonance band N_{ERES} being an engine speed range where an engine vibration frequency is equal to the resonance frequency of a drive line (e.g. axles 36) from the engine 18 to the driving wheels 38 for example. When the engine speed N_{E} passes through the engine resonance band N_{ERES}, a relatively large vehicle vibration and vehicle noise (hereinafter, vibration noise) is easy to occur. Accordingly, the driver may recognize the stop of the engine 18 by the vehicle vibration noise occurring when the engine speed N_{E} passes through the engine resonance band N_{ERES} during the engine rotation process. On the other hand, in the engine rotation stop process, to put off the lowering of the engine speed N_{E} by the first electric motor M1 until the completion of the M2 pressing control effected by the second electric motor M2 and to suppress a variation in the driving force attendant on the lowering of the engine speed N_{E}, a certain time is required from the start of the lowering to the passage of the engine resonance band N_{ERES}. Thus, the illumination of the EV lamp 50 from the start of the engine rotation stop process does not coincide with the driver's recognition of the engine stop based on the vehicle vibration noise upon the engine rotation stop process, that is, there occurs a time difference between the lamp turning-on and the engine stop recognition, which may render the driver easy to have an uncomfortable feeling. In particular, during the low vehicle speed running or the vehicle stop where the vehicle vibration noise is originally small, the driver may easily feel the vehicle vibration noise (vibration noise at engine stop) the engine rotation stop process and may more easily have the uncomfortable feeling.

Thus, in this embodiment, assuming that in motor running the EV lamp 50 is turned on from the start of the engine rotation stop process for example, the turning on of the EV lamp 50 is delayed from the start of the engine rotation stop process when the vehide speed V is in a predetermined low vehicle speed range VLow including vehicle stop that is previously experimentally found and defined as a vehicle speed range where the driver is easy to feel the vehicle vibration noise occurring on passage of the engine speed N_{E} through the engine resonance band N_{ERES}, i.e., the vehicle speed V is less an upper-limit vehicle speed VLow' (e.g. 15 [km/h]) of the low vehicle speed range VLow. For example, in the predetermined low vehicle speed range VLow, the illumination of the EV lamp 50 is delayed from the start of the engine rotation stop process based on the engine speed N_{E} lowered for the engine rotation stop in the engine rotation stop process. Specifically, in the predetermined low vehicle speed range VLow, the EV lamp 50 is turned on if the engine speed N_{E} lowered for the engine rotation stop falls below the engine resonance band N_{ERES}, i.e., if the engine speed N_{E} becomes less than a lowering determination threshold value N_{E}Low (e.g. 200 [rpm]) that is previously experimentally found and set for determining that the engine speed N_{E} falls below the engine resonance band N_{ERES}.

Since the engine stop position control for adjusting the crank angle A_{CR} is performed by the first motor M1 at the completion of the engine rotation stop process, the engine speed N_{E} may temporarily go up (rise) beyond the lowering determination threshold value N_{E}Low even when control is not performed to raise the engine speed N_{E}. In consequence, the EV lamp 50 may experience a blinking that after a temporary illumination of the REV lamp 50 as a result of the engine speed N_{E} falling below the lowering determination threshold value N_{E}Low, the EV lamp 50 temporarily goes off due to a temporary rise exceeding the lowering determination threshold value N_{E}Low and thereafter again goes on, whereupon the driver may easily have an uncomfortable feeling of the lamp flashing. The engine stop position control is a control for adjusting the crank angle A_{CR} by the first electric motor M1 so that the engine stops when the crank angle A_{CR} lies within a predetermined rotational angle (position) range but is not a control for intentionally raising the engine speed N_{E}. Accordingly, in this embodiment, the EV lamp 50 remains on if the engine speed N_{E} temporarily rises beyond the lowering determination threshold value N_{E}Low when control is not performed to raise the engine speed N_{E} during the engine stop position control) after the turning on of the EV lamp 50.

Furthermore, in this embodiment, during the turning on of the EV lamp 50. extinguishing of the EV lamp 50 is delayed from the start of the engine start-up process of raising the engine speed N_{E} for the engine start-up. For example, during the turning on of the EV lamp 50, the EV lamp 50 is turned off if the engine speed N_{E} raised in the execution of the engine start-up process for the engine start-up exceeds the engine resonance band N_{ERES}, i.e., when the engine speed N_{E} exceeds a rise determination threshold value N_{E}Up (e.g. 400 [rpm]) that is previously experimentally found and set for determining that the engine speed N_{E} exceeds the engine resonance band N_{ERES}.

In such a running state as to make the vehicle vibration noise substantially indistinguishable, e.g., in a certain degree of high-speed running (e.g., high-speed running in which the vehicle speed V is not less than the upper-limit vehicle speed VLow' of the low vehicle speed range VLow), the driver may hardly have the uncomfortable feeling as brought about by the occurrence of a time difference between the lamp turning-on and the engine stop recognition, and hence any problem may hardly occur even though the EV lamp 50 is turned on from the start of the engine rotation stop process. In the engine rotation stop process, however, during the M2 pressing control by the second electric motor M2, the engine 18 is independently operated at the predetermined idling speed N_{EIDL} with the first electric motor M1 being in no-load state, and therefore the engine speed N_{E} may rise regardless of no control to raise the engine speed N_{E}. Namely, in spite of the absence of intentional control to raise the engine speed N_{E}, the engine speed N_{E} may rise. At this time, the engine rotation stop process is interrupted to lower the raised engine speed N_{E} by motoring (i.e., acting on) the first electric motor, after which the engine rotation stop process is resumed. As a result, the EV lamp 50 may blinking because the EV lamp 50, turned on from the start of the engine rotation stop process, temporarily goes off and thereafter again goes on, which may give the driver an uncomfortable feeling.

Thus, in this embodiment, assuming that in motor running mode the EV lamp 50 is turned on from the start of the engine rotation stop process for example, the EV lamp 50 remains on if the engine speed N_{E} temporarily rises when control is not performed to raise the engine speed N_{E} after the turning on of the EV lamp 50 during the engine independent operation for keeping the idling speed N_{EIDL}), for example, if the engine speed temporarily rises beyond an engine-speed rise determination threshold value N_{E}Rise predetermined idling speed N_{EIDL}+α[rpm]) that is previously experimentally found and set as a rise in the engine speed as to need the lowering of the engine speed N_{E} by motoring (i.e., acting on) the first electric motor. Furthermore, in this embodiment, while the EV lamp 50 is on, extinguishing of the lamp 50 is delayed from the start of the engine start-up process of raising the engine speed N_{E} for the engine start-up. For example, while the EV lamp 50 is on, the EV lamp 50 is turned off if the engine speed N_{E} raised in the execution of the engine start-up process when the engine start-up exceeds the predetermined complete-combustion rotational speed N_{E}A (e.g. 700[rpm]).

More specifically, a lamp-on control portion i.e. a lamp-on control means 106 outputs a command to turn off the EV lamp 50 to the EV lamp 50 when a lamp-on flag SF_lp is off for example. On the other hand, the lamp-on control means 106 outputs a command to turn on the EV lamp 50 when the lamp-on flag SF_lp is on for example.

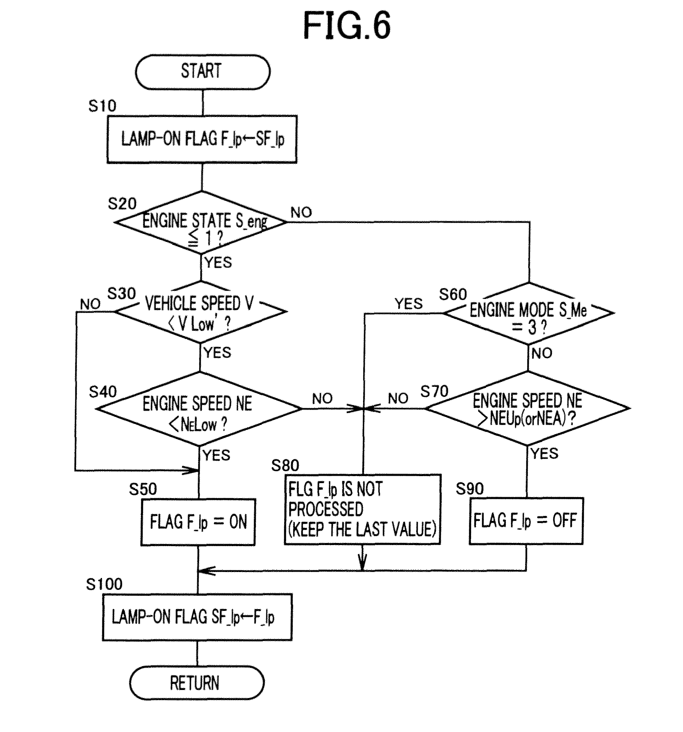

A lamp-on flag read/rewrite portion i.e. a lamp-on flag read/rewrite means 108 reads in succession, as a lamp-on flag F_lp for control action, the lamp-on flag SF_lp for use in on/off switching control of the EV lamp 50 performed by the lamp-on control means 106. To avoid direct processing of the lamp-on flag SF_lp in the control action of a flowchart of Fig. 6 described later for example, the tamp-on flag F_lp for control action is a full copy of the lamp-on flag SF_lp as the lamp-on flag used in the control action of the flowchart of Fig. 6. The lamp-on flag read/rewrite means 108 rewrites in succession the content of the lamp-on flag SF_lp, based on the content of the lamp-on fia^{g} F-lp for control action after the processing in the control action of the flowchart of 6 6 for example.

An engine state setting portion i.e. an engine operating state setting means 110 sets an engine state flag S_eng based on the current state of the engine 18 for example. Specifically, the engine state setting means 110 sets the engine operating state flag S_eng to "0" representing an rotation stop state if the engine 12 is in the rotation stop state. The engine operating state setting means 110 sets the engine operating state flag S_eng to "1" representing that the engine is bering stopped if the engine rotation stop process is performed by the hybrid control means 102 (the benzine start/stop control means 104). The engine operating state setting means 110 sets the engine operating state flag S_eng to "2" representing that the engine is bering started if the engine start-up process is performed by the hybrid control means 102 (the engine start/stop control means 104). The engine operating state setting means 110 sets the engine operating state flag S_eng to "3" representing that the engine is in operation if the engine 12 is in an independent operation keeping the engine speed N_{E} at the idling speed for example or if the first electric motor M1 is in a lead operation receiving a redaction force against the engine torque to output a driving torque.

An engine operating mode setting portion i.e. an engine operating mode setting means 112 sets ain engine operating mode flag S_Me based on the current operating, mode of the engine 1 for example. Specifically, the engine operating mode setting means 112 sets the engine operating mode flag S_Me to "0" representing a stop state, irrespective of whether the engine 18 is in the rotation stop state, as long as the engine 12 stops its operation such as injecting fuel. The engine operating mode setting means 112 sets the engine operating mode flag S_Me to "1" representing a load operating state if the engine 12 operates with a load. The engine operating mode setting means 112 sets the engine operating mode flag S_Me to "2" representing an independent operating state if the engine 12 independently operates. The engine operating mode setting means 112 sets the engine operating mode flag S_Me to "3" representing a motoring state if motoring to lower the engine speed N_{E} is executed by the first electric motor M1 due to the engine speed N_{E} raised when the engine 2 is independently operating for example. The engine operating mode setting means 112 sets the engine operating mode flag S_Me to "4" representing an engine racing state if there is a rise in the engine speed N_{E} (racing of the engine 18) when in neutral state for example.

An engine operating state determining portion i.e. an engine operating, state determining means 114 determines e.g. whether the engine operating state flag S_eng set by the engine operating state setting means 110 is "1" or less, i.e., whether the engine operating state flag S_eng is "0" representing the engine rotation stop state or "1" representing that the engine is in the rotation stop process.

If` it is determined by the engine operating state determining means 114 that the engine operating state flag S_eng is not "1" or less for example, an engine operating mode determining portion i.e. an engine operating mode determining means 116 determines whether the engine operating mode flag S_Me set by the engine operating mode setting means 112 is "3" representing the motoring state.

If it is determined by the engine operating state determining means 114 that the engine operating state flag S_eng is "1" or less for example, a running state determining portion i.e. a running state determining means 118 determines whether the vehicle speed V is in the predetermined low vehicle speed range VLow, i.e., whether the vehicle speed V is less than the upper-limit vehicle speed VLow' of the low vehicle speed range VLow. If it is determined by the running state determining means 118 that the vehicle speed V is less than the upper-limit vehicle speed VLow' for example, the running state determining means 118 determines whether the engine speed N_{E} is less than the lowering determination threshold value N_{E}Low. If it is determined by the engine operating mode determining means 116 that the engine operating mode flag S_Me is not "3" for example, the running state determining means 118 determines whether the engine speed N_{E} increases and exceeds the rise determination threshold value NEUp. When the running state determining means 118 determines that the vehicle speed V is not less than the upper-limit vehicle speed VLow' of the low vehicle speed range VLow for example, the running state determining means 118 may determine whether the engine speed N_{E} exceeds the complete-combustion rotational speed N_{E}A if it is determined by the engine operating mode determining, means 116 that the engine operating mode flag S_Me is not "3".

A lamp-on flag setting portion i.e. a lamp-on flag setting means 120 sets the lamp-on flag F_lp for control action to on, e.g., if it is determined by the running state determining means 118 that the vehicle speed V is not less than the upper-limit vehicle. speed VLow* of the low vehicle speed range VLow or if it is determined by the running state determining means 118 that the engine speed N_{E} is less than the lowering determination threshold valve N_{E}=Low. On the other hand, the lamp-on flag setting means 120 keeps the current state without processing, the lamp-on flag F_lp for control action, e.g., if it is determines by the running state determining means 118 that the engine speed N_{E} is not less than the lowering determination threshold value N_{E}Low: if it is determined by the engine operating mode determining means 116 that the engine operating mode flag S_Me is "3"; or if it is determined by the running state determining means 118 that the engine rotation speed N_{E} does not exceed the rise determination threshold value N_{E}Up (or the complete-combustion rotational speed N_{E}A). In other words, the lamp-on flag setting means 120 keeps the last value of the lamp-on flag F_lp for control auction as it is. On the other hand, the lamp-on flag setting means 120 sets the lamp-on flag F_lp for control action to off, e.g., if it is determined by the running state determining means 118 that the engine speed N_{E} exceeds the rise determination threshold value N_{E}Up (or the complete-combustion rotational speed N_{E}A).

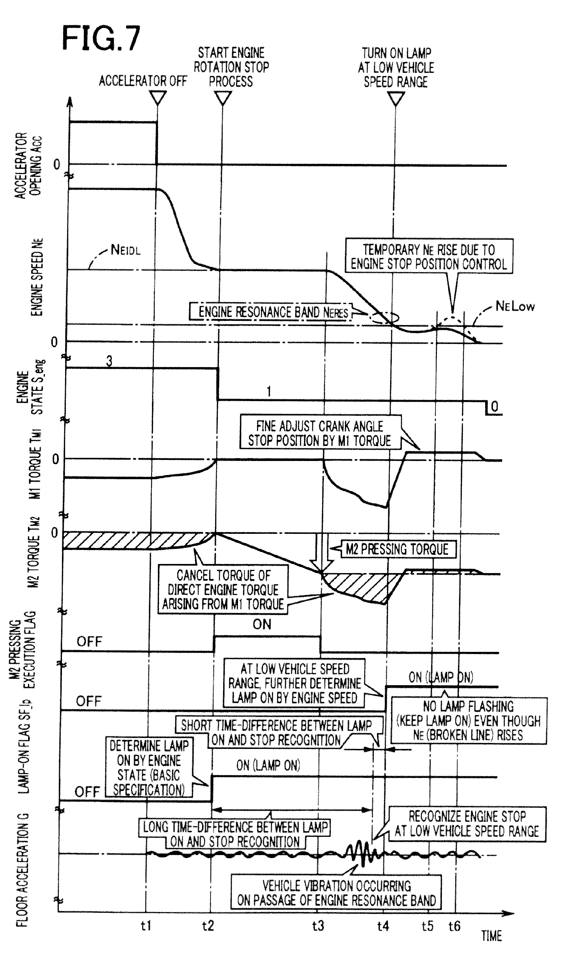

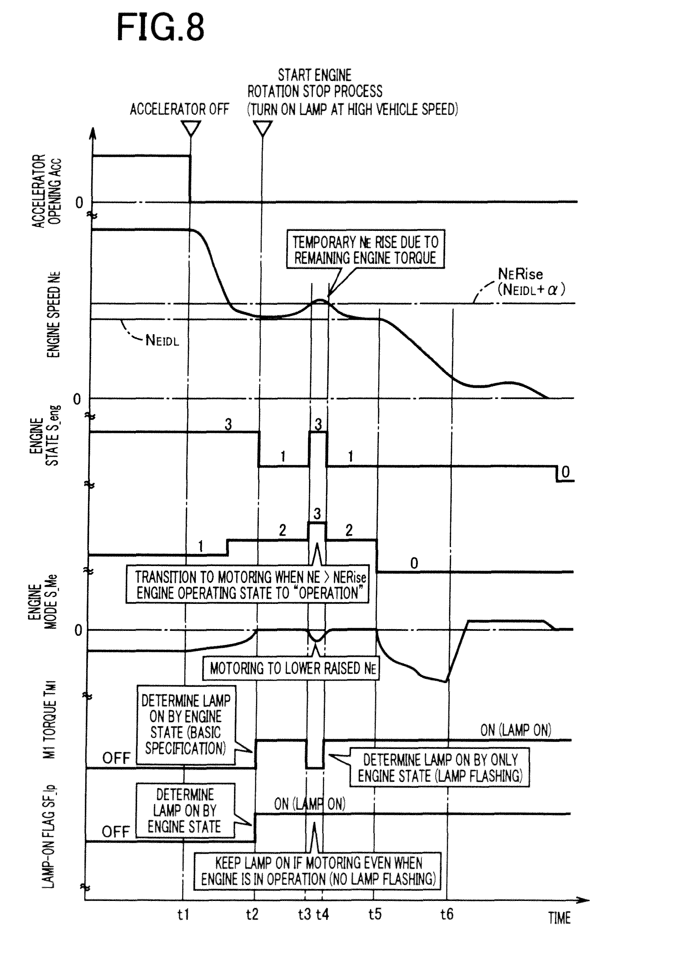

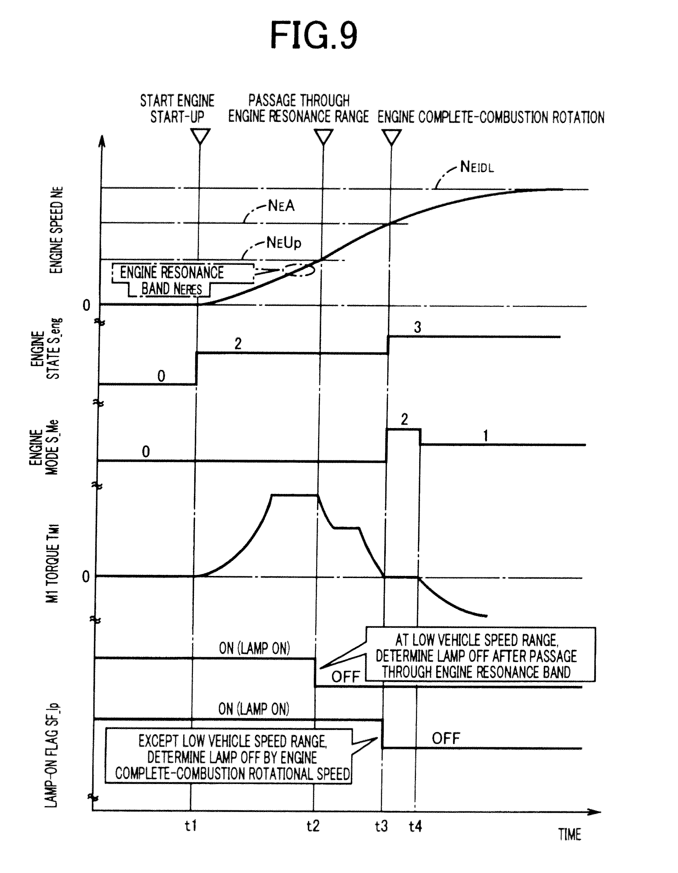

Fig. 6 is a flowchart explaining major control actions of the electronic control device 100. i.e., control actions for suppressing an uncomfortable feeling attributable to turning on of the EV lamp 50, the flow being repeatedly executed with an extremely short cycle time of the order of several milliseconds to several tens of milliseconds, for example. Figs. 7 to 9 are timing charts corresponding to the control actions depicted in the flowchart of Fig. 6. Fig. 7 is an example of the timing chart when the vehicle speed V is in the low vehicle speed range VLow for example. Fig. 8 is an example of the timing chart e.g. when the vehicle speed V is a high vehicle speed not lying in the low vehicle speed range VLow, i.e., when the vehicle speed V is not less than the upper-limit vehicle speed VLow' of the low vehicle speed range VLow. Fig. 9 is an example of the timing chart e.g. when the engine start-up is performed after the turning on of the EV lamp 50.

In Fig. 6, at steep (hereinafter, "step" is omitted) S10 corresponding to the lamp-on flag read/rewrite means 108, the lamp-on flag SF_lp is read as the lamp-on flag F_lp for control action for example. Next, at S20 corresponding to the engine operating state determining means 114. it is determines whether the engine operating state flag S_eng set by the engine operating, state setting means 110 is "1" or less for example. If the determination at S20 is affirmative, it is determines at S30 corresponding to the running state determining means 118 whether the vehicle speed V is less than the upper-limit vehicle speed VLow' of the low vehicle speed range VLow (at 12 of Fig. 7 and at t2 of Fig. 8) for example. If the determination at S30 is affirmative, it is determined at S40 also corresponding to the running state determining means 118 whether the engine speed N_{E} is less than the lowering determination threshold value N_{E}Low (at and after t2 of Fig. 7) for example. If the determination at S30 is negative or the determination at S40 is affirmative, the lamp-on flag F_lp for control action is set to on for example at S50 corresponding to the lamp-on flag setting means 120 (at t4 of Fig. 7 and at t2 of Fig. 8). On the other hand, if the determination at S20 is negative, it is determined at S60 corresponding to the engine operating mode determining means 116 whether the engine operating mode flag S_Me set by the engine operating mode setting means 112 is "3" representing the motoring state (at t3 of Fig. 8 and at and after t1 of Fig. 9) for example. If the determination at S60 is negative, it is determined at S70 corresponding to the running state determining means 118 whether the engine speed N_{E} exceeds the rise determination threshold value N_{E}Up for example. When the vehicle speed V is not less than the upper-limit vehicle speed VLow' of the low vehicle speed range VLow for example, it may be determined at S70 whether the engine speed N_{E} exceeds the complete-combustion rotational speed N_{E}A (at and after t1 of Fig. 11). If the determination at S40 is negative or if the determination at S60 is affirmative or if the determination at S70 is negative, the lamp-on flag F_lp for control action is not processed for example, i.e., the last value of the lamp-on flag F_lp for control action is kept as it is at S80 corresponding to the lamp-on flag setting means 120 (at t5 and t6 of Fig. 7, at t3 and t4 of Fig. 8, at or before t2 of Fig. 9 (or at or before t3 of Fig. 9 when the vehicle speed V is the upper-limit vehicle speed VLow' or more)). On the other hand, if the determination at S70 is affirmative, the lamp-on flag F_lp for control action is set to off for example at S90 corresponding to the lamp-on flag setting means 120 (at and after t2 of Fig. 9 (or at and after t3 of Fig. 9 when the vehicle speed V is the upper-limit vehicle speed VLow' or more)). At S100 corresponding to the lamp-on flag read/rewrite means 108, subsequent to S50, S80, or S90, the content of the lamp-on flag SF_lp is rewritten based on the content of the current lamp-on flag F_lp for control action.

In Fig. 7, a time difference between the lamp turning on and the stop recognition become relatively long in the basic specification where the EV lamp 50 is turned on if the engine operating, state flag S_eng is "1" or less for example. By contrast, in this embodiment, the lamp turning on is further determined by the engine speed N_{E} so that the time difference become relatively short while turning on the EV lamp 50 as early as possible. This suppresses the uncomfortable feeling from the illumination of the EV lamp 50. When the lamp on is determined by the engine speed N_{E}, the EV lamp 50 may experience a blinking if the engine speed N_{E} temporarily rises beyond the lowering determination threshold value N_{E}Low as a result of the engine stop position control. By contrast, in this embodiment, the lamp on is kept as it is even though the engine speed N_{E} temporarily rises, to suppress the blinking of the EV lamp 50. Thus, the uncomfortable feeling arising from turning on the EV lamp 50 is suppressed.

Referring to Fig. 8, in the basic specification where the EV lamp 50 is turned on if the engine operating state flag S_eng is "1" or less for example, the EV lamp 50 may blinking when the engine operating state flag S_eng goes to "3" representing that the engine is in operation as a result of a temporary rise in the engine speed N_{E}. By contrast, in this embodiment, the lamp on is further kept as it is when the engine operating mode flag S_Me is "3" representing the motoring state, with the result that the blinking of the EV lamp 50 is suppressed while turning on the EV lamp 50 as early as possible. Thus, the uncomfortable feeling from turning on the EV lamp 50 is suppressed.

Referring to Fig. 9, in the basic specification where the EV lamp 50 is turned on if the engine operating state flag S_eng is "1" or for example, the EV lamp 50 turns off when the engine operating state flag S_eng goes to "2" representing that the engine is in the start-up process as result of the engine start-up. By contrast, in this embodiment, the lamp off is further determined by the engine speed N_{E} so that when the vehicle speed V is less than the upper-limit vehicle speed VLow', the time difference between the lamp extinguishing and the engine start-up recognition becomes relatively short while keeping the EV lamp 50 active as long as possible or so that when the vehicle speed V is not less than the upper-limit vehicle speed VLow', the EV lamp 50 remains on for a longer period.

As described above, according to this embodiment, assuming that in motor running mode the EV lamp 50 is turned on from the start of the engine rotation stop process, the turning on of the EV lamp 50 is delayed from the start of the engine rotation stop process when the vehicle speed V is in a predetermined low vehicle speed range VLow including vehicle stop that is previously experimentally found and defined as a vehicle speed range where the driver is easy to feet the vehicle vibration noise attendant on passage of the engine speed N_{E} through the engine resonance band N_{ERES}, whereupon in the case where the vehicle 10 is in the predetermined low vehicle speed range VLow for example, a time difference can be suppressed between the illumination timing of the EV lamp 50 in the engine rotation stop process and the stop timing of the engine 18 that the driver feets by the vehicle vibration occurring when the engine speed N_{E}, lowered in the engine rotation stop process, passes through the engine resonance band N_{ERES}. In the case where the vehicle 10 is not in the predetermined low vehicle speed range VLow, i.e., where the vehicle 10 is in a vehicle speed range originally hard to feel the vehicle vibration noise, the EV lamp 50 is allowed to go on as soon as possible after the start of the engine rotation stop process. Thus, the EV lamp 50 can be burned on as early as possible and the uncomfortable feeling arising from the illumination of the EV lamp 50 is suppressed.

According to this embodiment, in the predetermined low vehicle speed range VLow, illumination of the EV lamp 50 is delayed from the start of the engine rotation stop process based on the engine speed N_{E} lowered for the engine rotation stop in the engine rotation stop process, specifically, the EV lamp 50 is turned on if the engine speed N_{E}, lowered for the engine rotation stop, falls below the engine resonance band N_{ERES}, whereupon in the case where the vehicle 10 is in the predetermines low vehicle speed range VLow for example, the EV lamp 50 is allowed to turn on as early as possible and a time difference can be securely (properly) suppressed between the illumination timing of the EV lamp 50 in the engine rotation stop process and the stop timing of the engine 18 that the driver feels by the vehicle vibration noise occurring when the engine speed N_{E}, lowered in the engine rotation stop process, passes through the engine resonance band N_{ERES}.

According to this embodiment, the EV lamp 50 remains can if the engine speed N_{E} temporarily rises beyond the lowering determination threshold value N_{E}Low when control is not performed to raise the engine speed N_{E} (e.g. during the engine stop position control) after the turning on of the EV lamp 50, whereupon in contrast with the fact that the EV lamp 50 may undergo a blinking that the EV lamp 50 temporarily is turned off and then again turned on as a result of a temporary rise in the engine speed N_{E} occurring when control is not performed to raise the engine speed N_{E} after turning on the EV lamp 50 based on the engine speed N_{E} when the vehicle 10 is in the predetermines low vehicle speed range VLow for example, i.e., as a result of an unintended temporary rise in the engine speed N_{E} i.e. an unintended temporary rise in the engine speed, the turning on of the EV lamp 50 is kept to suppress the blinking of the EV lamp 50 in case of the unintended temporary rise in the engine speed N_{E}. This suppresses a feet of lamp blinking (an uncomfortable feeling of the lamp flashing) after the temporary illumination of the EV lamp 50.

According to this embodiment, during the turning on of the EV lamp 50. extinguishing of the EV lamp 50 is delayed from the start of the engine start-up process of raising the engine speed N_{E} for the engine start-up, for example, the EV lamp 50 is turned off if the engine speed N_{E} raised in the execution of the engine start-up process exceeds the engine resonance band N_{ERES}, whereupon a time difference can be securely suppressed between the timing of the indicator lamp turning, off when the motor running goes out of use during the engine start-up process and the engine start-up timing that the driver feels by the vehicle vibration noise occurring when the engine speed N_{E} raised in the engine, start-up process passes through the engine resonance band N_{ERES} for example. Thus, the EV lamp 50 can remain of as long as possible, suppressing the uncomfortable feeling arising from the illumination of the EV lamp 50.

According to this embodiment, assuming that in motor running mode the EV lamp 50 is turned on from the start of the engine rotation stop process, the EV lamp 50 remains on if the engine speed temporarily rises when control is not performed to raise the speed N_{E} after the turning on of the EV lamp 50 (e.g., during the engine independent operation for keeping the sidling speed for example, if the engine speed temporarily rises so as to be equal to or beyond an engine-speed rise determination threshold value N_{E}Rise that is previously experimentally found and set as a rise in the engine speed as to need the lowering of the engine speed N_{E} by motoring musing the first electric motor. Therefore, in contrast with the fact that the EV lamp 50 may undergo a blinking in that the EV lamp 50 is temporarily turned off and then again turned on as a result of a temporary rise in the engine speed N_{E} occurring when control is not performed to raise the engine speed after turning can the EV lamp 50, as a result of an unintended temporary rise in the engine speed the blinking of the EV tamp 50 is suppressed. Thus, the EV lamp 50 can be turned on as soon as possible after the start of the engine rotation stop process, suppressing a feel of lamp blinding (an uncomfortable feeling of the lamp flashing) after the temporary illumination of the EV lamp 50, i.e., an uncomfortable feeling arising from the illumination of the EV lamp 50.

According to this embodiment, white the EV lamp 50 is on, extinguishing of the EV lamp 50 is delayed from the start of the engine start-up process of raising the engine speed N_{E} for the engine start-up, for example, the EV lamp 50 is turned off it the engine speed N_{E} raised in the execution of the engine start-up process for the engine start-up exceeds the predetermined complete-combustion rotational speed N_{E}A, whereupon the EV lamp 50 can remain on as long as possible until the actual start-up of the engine 18 after the start of the engine start-up process.

According to this embodiment, the E_{V} lamp 50 is turned on also when the vehicle is in the motor running mode where the engine 18 is in the rotation stop state, so that the driver can be informed of being in the motor running mode through turning, on of the EV lamp 50 e.g. during the motor running mode where the engine 18 is in the rotation stop state and during the engine rogation stop process where the engine is is controlled toward the rotation stop state.

According to this embodiment, in the hybrid vehicle 10 having the transmision mechanism 14 that is an electric differential device for example, the EV lamp 50 can be turned on as early as possible, suppressing an uncomfortably feeling arising from the turning can of the EV lamp 50.

Although the embodiment of the present invention has hereinabove been described in detail with preference to the drawings, the present invention is applicable two the other forms.

Although for example, in the embodiment, when the vehicle 10 is in the predetermined low vehicle speed range VLow, the illumination of the EV lamp 50 is delayed from the start of the engine rogation stop process based on the engine speed N_{E}, by turning on the EV lamp 50 can condition that the engine speed N_{E} lowered for the engine rotation stop in the engine rogation stop process falls below the engine resonance band N_{ERES}, this is not limitative and the turning on of the EV lamp 50 may be delayed from the start of the engine rogation stop process by the other forums. For example, when the vehicle 10 is in the predetermined low vehicle speed range VLow, the EV lamp 50 may be turned on when a predetermined lowering time previously experimentally found and set for determination that the engine speed N_{E} falls below the engine resonance band N_{ERES} has elapsed from the start of the engine rogation stop process (or from the start of lowering of the engine speed N_{E} by the first electric motor M1), to whereby delay the turning on of the EV lamp 50 from the start of the engine rotation stop process based on the elapsed time from the start of the engine rogation stop process. For example, when the vehicle 10 is in the predetermined low vehicle speed range VLow, the EV lamp 50 may be turned on when a predetermined vibration (or vehicle vibration) at the engine stop is detected by an acceleration sensor for example, the predetermine vibration being previously experimentally found and set as a vibration when the engine speed N_{E} passes through the engine, resonance band N_{ERES} after the start of the engine notation stop process, to thereby delay the turning can of the EV lamp 50 from the start of the engine rogation stop process based on the detention value of the acceleration sensor after the start of the engine rotation stop process. This also ensures the acquisition of substantially the same effect as the above.

Although in the embodiment the transmission mechanism 14 including the planetary gear strain (differential mechanism) 26 is exemplified as the power transmitting device 12 making up the vehicle 10 to which the resent invention is applied, this is not limitative and the power transmitting device may be configured to include the planetary-gear automatic transmission, the belt-type continuously variable transmission, the traction continuously variable transmission, etc. To sum up, the present invention is applicable to any hybrid vehicle as long as it has an engine and a motor as driving force sources for running, with the engine being stropped in the motor running mode.

Although in the embodiment the transmission mechanism 14 is provides with the planetary gear train 26 as a differential mechanism, the differential mechanism may be, in place of the planetary gear train 26, e.g. a differential gear train having a pinion rotationally drive by the engine 18 and a pair of bevel gears meshed with the pinion and operatively coupled to the first electric motor M1 and the output gear 28. Although the planetary gear strain 26 is a single planetary, it may be a double planetary.

Although in the embodiment the second electric motor M2 is directly coupled so the output gear 28, the position of coupling of the second electric motor M2 is not limited thereto so that it may be indirectly coupled via the transmission, the planetary gear train, an engagement device, etc.

The abode is merely one embodiment and the prevent invention may be carried out in variously modified or improved modes based on the knowledge of those skilled in the art.

### Description of Reference Numerals

- 10:: hybrid vehicle
- 14:: transmission mechanism (electric differential device)
- 18:: engine (driving force source for running)
- 26:: planetary gear train (differential mechanism)
- 50:: EV lamp (indicator lamp)
- 100:: electronic control device (control device)
- M1:: first electric motor (differential electric motor)
- M2:: second electric motor (driving force source for running, motor)

## Claims

1. A control device of a hybrid vehicle having an engine and a motor as driving force sources for running and configured to inform a driver that the vehicle is in motor running mode where the vehicle runs using only the motor as the driving force source for running, by turning on an indicator lamp, from the start of an engine rotation stop process preceding the motor running mode, wherein
in a predetermined low vehicle speed range previously defined as a vehicle speed range where the driver is sensitive to a vehicle vibration due to passage of an engine speed through an engine resonance band, turning on of the indicator lamp is delayed from the start of the engine rotation stop process.

2. The control device of a hybrid vehicle of claim 1, wherein
in the predetermined low vehicle speed range, turning on of the indicator lamp is delayed from the start of the engine rotation stop process, based on the engine speed lowered for engine rotation stop.

3. The control device of a hybrid vehicle of claim 2, wherein
in the predetermined low vehicle speed range, the indicator lamp is turned on if the engine speed lowered for the engine rotation stop falls below the engine resonance band.

4. The control device of a hybrid vehicle of claim 2 or 3, wherein
if, after turning on of the indicator lamp, the engine speed temporarily rises when control is not performed to raise the engine speed, the indicator lamp remains on.

5. The control device of a hybrid vehicle of any one of claims 1 to 4, wherein
while the indicator lamp is on, turning off of the indicator lamp is delayed from the start of an engine start-up process of raising the engine speed for engine start-up.

6. The control device of a hybrid vehicle of claim 5, wherein
while the indicator lamp is on, the indicator lamp is turned off if the engine speed raised for the engine start-up exceeds the engine resonance band.

7. A control device of a hybrid vehicle having an engine and a motor as driving force sources for running and configured to inform a driver that the vehicle is in motor running mode where the vehicle runs using only the motor as the driving force source for running, by turning on an indicator lamp, from the start of an engine rotation stop process preceding the motor running mode, wherein
if, after turning on of the indicator lamp, the engine speed temporarily rises when control is not performed to raise the engine speed, the indicator lamp remains on.

8. The control device of a hybrid vehicle of claim 7, wherein
while the indicator lamp is on, turning off of the indicator lamp is delayed from the start of the engine start-up process of raising the engine speed for engine start-up.

9. The control device of a hybrid vehicle of claim 8, wherein
while the indicator lamp is on, the indicator lamp is turned off if the engine speed raised for engine start-up exceeds a rotation speed enabling complete combustion in the engine.

10. The control device of a hybrid vehicle of any once of claim 1 to 9, wherein
in the motor running mode where the engine is in a rotation stop state, the indicator lamp is turned on.

11. The control device of a hybrid vehicle of any one of claims 1 to 10, wherein
the hybrid vehicle comprise an electric differential device having a differential mechanism coupled to the engine in a power transmittable manner and a differential electric motor coupled to the differential mechanism in a power transmittable manner, an operating state of the differential electric motor being controlled to control a differential state of the differential mechanism, and wherein
the engine is rotationally driven by the differential electric motor to lower and raise the engine speed.
